# FASCICULE DE BREVET EUROPEEN

(11) **EP 0 246 128 B1**
(45) Date de publication et mention de la délivrance du brevet: **16.03.1994**
(21) Numéro de dépôt: 87400890.7
(22) Date de dépôt: 17.04.1987
(51) Int. Cl.: G02F 1/133

(54) **Dispositif de modulation de la lumière d'éclairement d'un écran d'affichage électrooptique**
Modulierte Beleuchtungsvorrichtung für ein elektro-optisches Display
Modulated illumination device for an electro-optic display

(30) Priorité: 22.04.1986 FR 8605801
(43) Date de publication de la demande: 19.11.1987
(73) Titulaire: THOMSON-CSF, 75008 Paris (FR)
(72) Inventeur: Perbet, Jean-Noel, F-75008 Paris (FR); Hareng, Michel, F-75008 Paris (FR); Mourey, Bruno, F-75008 Paris (FR)
(74) Mandataire: Lepercque, Jean

(56) Documents cités:
- EP-A- 0 153 147
- WO-A-84/01037
- DE-A- 3 042 586
- GB-A- 2 067 813
- GB-A- 2 116 805
- US-A- 3 750 136
- PATENT ABSTRACTS OF JAPAN, vol. 7, no. 113 (P-197)[1258], 18 mai 1983; & JP-A-58 35 425
- PATENT ABSTRACTS OF JAPAN, vol. 8, no. 89 (P-270)[1526], 24 avril 1984; & JP-A-59 3420
- PATENT ABSTRACTS OF JAPAN, vol. 6, no. 59 (P-110)[937], 16 avril 1982; & JP-A-57 610
- ELECTRICAL DESIGN NEWS, vol. 17, 01.07.1972, no. 13, "Louvred film", page 119.

## Description

L'invention concerne un dispositif de modulation de la lumière d'éclairement d'un écran d'affichage électrooptique et notamment un dispositif de modulation pour écran d'affichage fonctionnant en transmission.

Un des problèmes rencontrés dans les écrans plats modulateurs de lumière, tels que les écrans à cristaux liquides est la difficulté de modifier la brillance moyenne de ces écrans pour les observer dans des ambiances lumineuses fortement variables (de 100 000 lux à quelques lux par exemple).

La solution la plus évidente, dans son principe, est de faire varier l'intensité lumineuse de la source d'éclairage associée à cet écran en modifiant sa tension ou sa fréquence d'alimentation.

Pour les écrans plats, on utilise en général, trois types d'éclairement :
a) incandescent
b) électroluminescent
c) fluorescent.

Examinons la possibilité de modifier le flux lumineux de ces éclairages :
a) dans le cas d'un éclairage à incandescence (halogène ou non) on constate que :
   la puissance lumineuse peut varier de façon continue en modifiant la tension d'alimentation. Par contre cette variation qui s'accompagne d'une modification de la température de couleur est inadaptée à des écrans couleur.
b) dans le cas d'un éclairage par électroluminescence (poudre AC : effet Destriau)
   on réalise facilement, grâce à cet effet, une source de lumière plane dont on peut faire varier (d'une décade environ) le flux lumineux par modification de la tension d'alimentation. Ce type de source présente deux inconvénients :
   - la courbe d'intensité lumineuse-tension présente un seuil et est non linéaire.
   - la lumière est émise dans une bande spectrale étroite.
c) enfin dans un éclairage par fluorescent :
   L'effet utilisé, qui est une décharge dans un gaz, présente un seuil en tension en-dessous duquel il est impossible d'allumer le tube fluorescent. Il est donc très difficile de faire varier le flux lumineux par variation de la tension d'alimentation. Par contre, une variation de la fréquence d'excitation permet de faire varier faiblement le flux émis.

L'invention concerne un dispositif de modulation utilisant tout type d'éclairage et évitent les inconvénients mentionnés précédemment.

Le document JP-A-57 610 décrit un dispositif d'affichage à cristal liquide comportant entre une source d'éclairage et l'afficheur à cristal liquide un moyen de commutation permettant de faire fonctionner le dispositif d'affichage soit en transmission, soit en réflexion. Cependant il ne s'agit pas de moduler la lumière émise par le dispositif d'affichage.

L'invention concerne un écran d'affichage comprenant :
- une source lumineuse ;
- un afficheur électrooptique éclairé par transparence par la source lumineuse ;
- des moyens de contrôle électrooptiques du faisceau lumineux émis par la source lumineuse, ces moyens étant commandables électriquement, étant situés entre la source lumineuse et l'afficheur électrooptique et laissant passer ou bloquant le faisceau lumineux ;
- un générateur de tensions connecté aux moyens de contrôle électrooptiques et leur fournissant une tension de commande ;
caractérisé en ce que les moyens de contrôle électrooptiques sont en outre des moyens de l'atténuation contrôlée permettant de varier l'intensité du faisceau lumineux transmis à l'afficheur électrooptique en fonction de la lumière ambiante.

Les différentes objets et caractéristiques de l'invention apparaîtront plus clairement dans la description qui va suivre faite en se reportant aux figures annexées qui représentent :
- la figure 1, un exemple de réalisation du dispositif de modulation de l'invention ;
- la figure 2, un exemple de réalisation détaillée du dispositif de modulation de l'invention dans un état de fonctionnement fournissant un éclairage élevé ;
- la figure 3, un exemple de réalisation détaillé du dispositif de modulation de la figure 2, dans un état de fonctionnement fournissant un éclairage faible ;
- la figure 4, un exemple de réalisation d'une variante du dispositif de l'invention ;
- la figure 5, un autre exemple de réalisation d'une variante du dispositif de modulation de l'invention ;
la figure 6, un exemple de réalisation des circuits de commande du dispositif de l'invention.

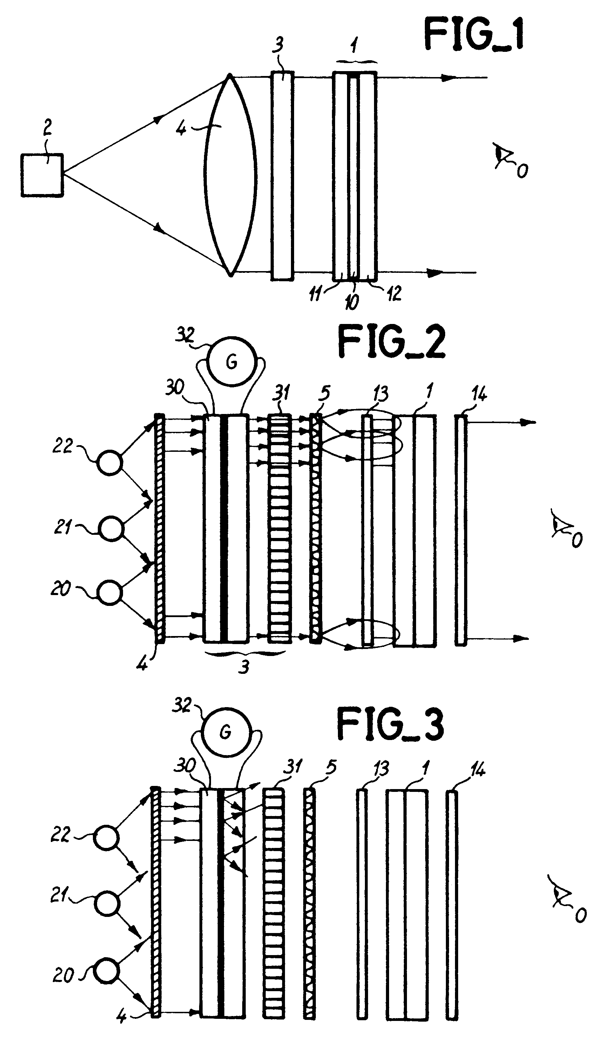

Sur la figure 1, on trouve donc un exemple de réalisation du dispositif de modulation de la lumière d'éclairement d'un écran à cristal liquide selon l'invention.

Ce dispositif comporte un afficheur électrooptique tel qu'un écran à cristal liquide 1 comprenant deux lames transparentes 11 et 12 qui enserrent un cristal liquide 10. Selon cet exemple de réalisation, l'écran à cristal liquide 1 fonctionne en transmission. Une source lumineuse 2 éclaire l'écran à cristal liquide 1 et permet à un observateur O placé à droite de l'écran (sur la figure) de voir par transparence les informations affichées sur l'écran.

Un dispositif de collimation 4 représenté par une lentille projette vers l'écran un faisceau parallèle d'éclairement .

Selon l'invention, entre l'écran à cristal liquide 1 et la source lumineuse 2 (et notamment le dispositif de collimation 4, on a placé un modulateur de lumière 3.

Ce modulateur est commandé électriquement par des moyens non représentés, soit manuellement, soit automatiquement en fonction de l'éclairage ambiant qui entoure l'écran à cristal liquide 1. De préférence, bien que cela ne soit pas obligatoire, le modulateur de lumière 3 agit de façon uniforme sur l'ensemble du faisceau lumineux projetté sur l'écran à cristal liquide.

En se reportant à la figure 2, on va décrire un exemple de réalisation détaillée du dispositif de l'invention.

On retrouve dans cet exemple de réalisation l'écran à cristal liquide 1. On a supposé que cet écran fonctionne entre polariseurs (nématique en hélice, biréfringence électriquement contrôlée, smectique C), on a donc prévu deux polariseurs 13 et 14 de part et d'autre de l'écran.

La source lumineuse 2 a été représentée par plusieurs sources 20, 21, 22 en vue de fournir un éclairage plus uniforme.

Le dispositif de collimation 4 est réalisé sous la forme d'un réseau du type lentille de Fresnel. Il fournit un éclairage uniforme du modulateur de lumière 3.

Le modulateur de lumière 3 comporte :
- une cellule à cristal liquide 30 contenant un cristal liquide d'anisotropie diélectrique négative et commandé par une source de tension 32 ;
- une optique de Schlieren tel qu'un diaphragme 31 comprenant dans son épaisseur un réseau de filtrage permettant de laisser passer les rayons lumineux perpendiculaires à la surface du diaphragme 31 et absorbant les rayons lumineux obliques par rapport à la surface du diaphragme. Un tel diaphragme se trouve dans le commerce sous la forme de plaques contenant, dans son épaisseur, un treillis dont le tissage permet le filtrage décrit précédemment. Il s'agit alors d'un filtre spatial directif de type "store vénitien" tels que les filtres directifs commercialisés sous la marque MINNESOTA 3M ("Light Control Film").

Quand le générateur 32 applique un champ électrique basse fréquence sur le cristal liquide d'anisotropie diélectrique négative, ce dernier passe d'un état transparent à un état diffusant.

Pour traduire cet effet en une variation de luminosité, on a recours à une optique de schlieren 31 ou un diaphragme associé à la cellule à cristal liquide 30 :
- la lumière est intégralement transmise dans l'état non excité de la cellule (et le diaphragme 31 est transparent).
- Il y a extinction dans l'état diffusant, car la lumière est bloquée par le diaphragme.

En figure 2, on a représenté le fonctionnement du dispositif lorsque le maximum de lumière est transmis vers l'écran à cristal liquide 1.

En figure 3, on a représenté le fonctionnement du même dispositif lorsque le minimum de lumière est transmis à l'écran à cristal liquide 1 en raison de la diffusion de la lumière ainsi diffusée, par l'obturateur 31.

Un tel obturateur fonctionne avec des tensions de l'ordre de 10 Volts avec des temps de réponse de 200 ms environ. La dynamique d'un tel obturateur dépend de la diffusion obtenue sous champ et du diaphragme associé. Elle est supérieure à I/IO = 10.

La source de lumière ainsi obtenue est collimatée pratiquement rigoureusement et il faut donc dans le cas d'écrans devant être observés selon un grand angle y associer un deuxième diffuseur. C'est pourquoi sur les figures 12 et 13, on trouve entre le diaphragme 31 et l'écran à cristal liquide 1 (ou le polariseur 13), un diffuseur 5 qui diffuse la lumière provenant du diaphragme 31 comme cela est indiqué par les lobes d'énergie dessinés sur la figure 2.

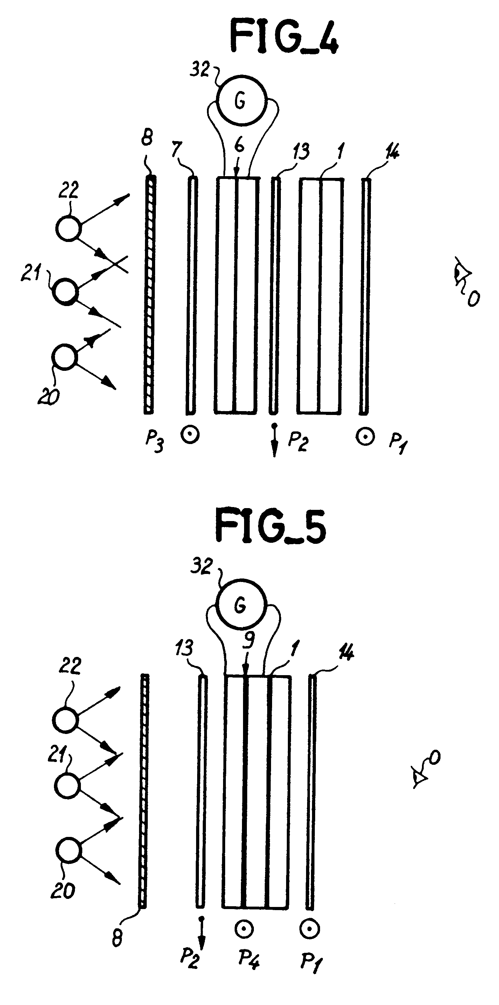

En se reportant à la figure 4, on va maintenant décrire un exemple de variante de réalisation de l'invention.

Sur cette figure, on retrouve l'écran à cristal liquide 1, auquel sont associés ses polariseurs 13, 14, ainsi que les sources lumineuses 20, 21, 22.

Entre les sources lumineuses 20, 21, 22 et le polariseur 13 sont placés un diffuseur 8, un polariseur 7 et une cellule à cristal liquide 6 contenant un cristal liquide nématique en hélice (TN).

Sur la figure 4, au-dessous des polariseurs 7, 13 et 14 sont indiqués des symboles représentant les sens de polarisation de ces polarisations. On voit donc que le sens de polarisation P3 du polariseur 7 est croisé par rapport au sens de polarisation P2 du polariseur 13, lequel est croisé par rapport au sens de polarisation P1 du polariseur 14.

Lorsque le générateur 32 applique une tension à la cellule à cristal liquide 6, un champ électrique d'excitation est appliqué, la cellule à cristal liquide 6 n'induit pas de rotation de polarisation de la lumière. Sous l'effet des deux polariseurs croisés 7 et 13, la lumière transmise par les sources 20 à 22 n'est pas ou peu transmise à l'écran à cristal liquide 14. Celui-ci est faiblement éclairé.

Lorsque le générateur 32 applique une tension à la cellule à cristal liquide, le fonctionnement est inverse et un maximum de lumière est transmis à l'écran à cristal liquide 1.

Comme on peut le voir dans l'exemple de réalisation de la figure 4, le polariseur 13 est commun à la cellule 6 et à l'écran 1, mais on peut également envisager que la cellule 6 ait ses propres polariseurs.

Les sens de polarisation P2 et P3 peuvent également être parallèles. Les cas de fonctionnement en éclairement maximal et minimal de l'écran 1 selon l'application d'un champ électrique d'excitation ou non sont alors inversés par rapport à la description qui précède.

Un tel dispositif de modulation fonctionne avec des tensions de quelques volts et des temps de réponse de 40 ms environ. La dynamique d'un tel obturateur est celle d'un afficheur de ce type I/I0 = 100.

Enfin, dans l'exemple de réalisation de la figure 4, le dispositif de collimation 4, prévu dans les dispositifs représentés en figures 1 à 3, n'est pas nécessaire en raison du type de fonctionnement de la cellule à cristal liquide 6.

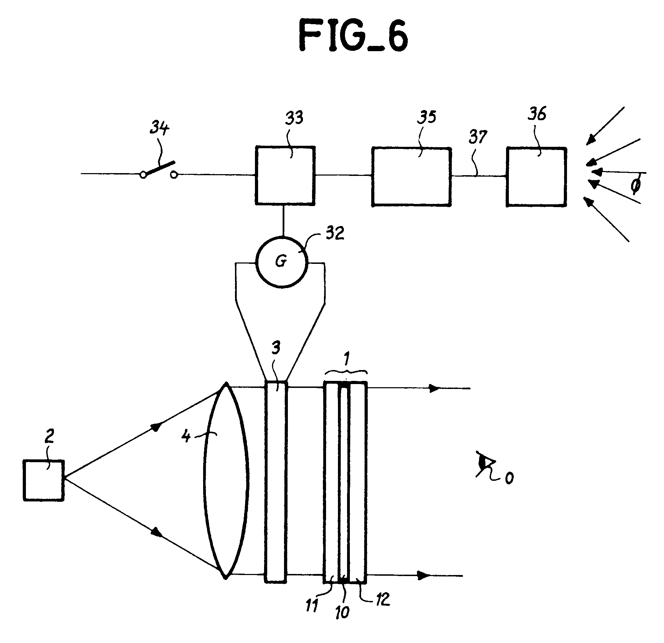

Selon une autre variante de réalisation de l'invention représentée en figure 5, on associe au cristal liquide de la cellule faisant office de modulateur de lumière, un colorant dichroïque qui absorbe ou non une polarisation selon son orientation. Dans le cas d'une géométrie planaire au repos et homéotrope sous champ, on peut passer d'un état absorbant à un état non absorbant. Les caractéristiques de l'effet électrooptique sont sensiblement identiques à celles du cristal liquide nématique en hélice.

Selon l'exemple de réalisation de la figure 5, on a alors accolé une cellule à cristal liquide 9 ainsi décrite à l'écran à cristal liquide 1. De part et d'autre de cet ensemble cellule-écran on a disposé deux polariseurs croisés 13 et 14 dont les sens de polarisation P2 et P1, ainsi que celui P4 de la cellule 7, sont indiqués en dessous de la figure 5.

Cette variante de réalisation fournit une structure plus compacte que les réalisations qui précèdent et nécessite un polariseur en moins par rapport à la réalisation représentée en figure 4.

Enfin, ces types d'obturateurs achromatiques peuvent utiliser, sans sortir du cadre de l'invention, d'autres effets électrooptiques :
a) Diffusant-transparent :
   . l'effet mixte thermique et diélectrique dans les smectiques A qui présente l'avantage de la mémoire.
   . Transition cholestérique-nématique (mémoire)
   . Effet d'un champ électrique sur une céramique piézoélectrique de type PLZT.
b) Absorption de la lumière : par exemple la transition cholestérique nématique avec un colorant.

Tous ces modulateurs présentent des caractéristiques communes :
- simplicité : structure de type à cellule à cristal liquide dont la réalisation est identique à celle de l'afficheur.
- Cette cellule dans le cas du nématique avec colorant peut être réalisée en utilisant une des faces de l'écran lui-même comme substrat.
- Tensions d'alimentation analogues à celles de l'écran.
- Systèmes totalement achromatiques.

De tels obturateurs commandés électriquement permettent de moduler l'intensité lumineuse des systèmes d'éclairage associés à des écrans non émissifs (par exemple à cristal liquide). Ils ont, en général, une faible perte d'insertion et sont parfaitement adaptés à des écrans couleur car achromatiques.

Dans le cas d'un obturateur de dynamique de l'ordre de 100 (nématique en hélice) on pourra observer les écrans dans une gamme d'éclairement de 100 000 lux à 10 lux, l'oeil ayant une dynamique propre de l'ordre de 100.

Il est bien évident que d'autres variantes de réalisation de l'invention sont possibles sans sortir du cadre de l'invention. Par ailleurs, les valeurs numériques n'ont été données qu'à titre indicatif pour illustrer l'invention.

Comme cela a été mentionné précédemment, le dispositif de modulation peut être commandé soit manuellement, soit automatiquement en fonction d'évènement extérieur tel que l'éclairage ambiant.

En se reportant à la figure 6, on va décrire des circuits permettant de réaliser cette commande.

On a repris pour représenter ces circuits le dispositif de la figure 1, mais ces circuits sont applicables aux autres formes de réalisation de l'invention.

Le modulateur 3, réalisé sous la forme de cellules à cristal liquide (30, 6, 9) dans les exemples de réalisation des figures 2 à 5, est commandé par un générateur de tensions 32. La valeur de la tension fournie par ce générateur 32 est commandée par un circuit de commande 33.

Le circuit de commande est commandé :
- soit manuellement par un circuit représenté de façon simplifiée par un contact 34 commandable manuellement et appliquant des signaux de commande au circuit 33 ;
- soit automatiquement à l'aide de circuits 35 et 36 réagissant par exemple à l'éclairage ambiant dans lequel sont placés l'écran à cristal liquide 1 et l'observateur O.

Dans ce dernier cas de commande, le circuit 36 est, par exemple, un photodétecteur ou tout autre circuit de détection sensible au flux lumineux φ qu'il reçoit et fournissant sur une liaison 37 un signal traduisant l'intensité lumineuse reçue. Ce signal est transmis à un circuit de traitement 35 qui en fonction de ce signal fournit un signal de commande au circuit de commande 33 qui commande de façon appropriée le générateur 32.

Par exemple, si l'intensité du rayonnement lumineux (lumière ambiante) reçu par le circuit de détection 36 est faible (semi-obscurité par exemple), le circuit 33 commandera le générateur 32 de telle façon que celui-ci fournisse un niveau de tension au dispositif de modulation qui atténuera l'intensité du faisceau d'éclairement fourni par la source 2 à l'écran à cristal liquide 1.

Inversement, si l'intensité du rayonnement lumineux reçu par le circuit de détection 36 est élevée, le dispositif de modulation permettra un éclairage plus intense de l'écran à cristal liquide 1.

Le dispositif de l'invention permet ainsi d'adapter la luminosité d'affichage d'un écran à cristal liquide aux conditions ambiantes d'éclairement dans lequel se trouve un utilisateur de cet écran.

Les circuits 32 à 36 de la figure 6 sont réalisables aisément dans l'état actuel de la technique pour mettre en oeuvre l'invention. Il n'est donc pas utile de les décrire dans le détail. Le dispositif de détection sera placé de préférence à proximité de l'écran à cristal liquide et si possible sur la face avant de cet écran.

## Revendications

1. Ecran d'affichage comprenant :
- une source lumineuse (2) ;
- un afficheur électrooptique (1) éclairé par transparence par la source lumineuse (2) ;
- des moyens de contrôle électrooptiques (3) du faisceau lumineux émis par la source lumineuse (2), ces moyens étant commandables électriquement, étant situés entre la source lumineuse et l'afficheur électrooptique et laissant passer ou bloquant le faisceau lumineux ;
- un générateur de tensions (32) connecté aux moyens de contrôle électrooptiques et leur fournissant une tension de commande ;
caractérisé en ce que les moyens de contrôle électrooptiques (3) sont en outre des moyens de l'atténuation contrôlée permettant de varier l'intensité du faisceau lumineux transmis à l'afficheur électrooptique (1) en fonction de la lumière ambiante.

2. Ecran d'affichage selon la revendication 1, caractérisé en ce que les moyens de modulation (3) comportent une cellule à cristal liquide (30, 6, 7).

3. Ecran d'affichage selon la revendication 2, caractérisé en ce que :
- la cellule à cristal liquide (30) comporte un cristal liquide d'anisotropie diélectrique tel qu'il possède deux états, l'un transparent, l'autre diffusant selon qu'on lui applique un champ électrique ou non ;
- il comporte en outre un diaphragme (31) situé entre ladite cellule à cristal liquide (30) et l'afficheur électrooptique (1), ce diaphragme laissant passer la lumière normale à son plan et bloquant la lumière oblique par rapport à son plan.

4. Ecran d'affichage selon l'une des revendications 2 ou 3, caractérisé en ce que le cristal liquide (30) est un cristal liquide nématique.

5. Ecran d'affichage selon l'une des revendications 2 ou 3, caractérisé en ce que le diaphragme (31) comporte un réseau de filtrage.

6. Ecran d'affichage selon l'une des revendications 2 ou 3, caractérisé en ce que :
- la cellule à cristal liquide (6) comporte un cristal liquide nématique en hélice ;
- de part et d'autre de la cellule à cristal liquide sont placés un premier polariseur (7) et un deuxième polariseur (13), les directions de polarisation (P3 et P2) de ces polariseurs étant orthogonales.

7. Ecran d'affichage selon la revendication 6, caractérisé en ce que l'afficheur électrooptique (1) comporte un cristal liquide nématique en hélice et est placé entre le deuxième polariseur (13) et un troisième polariseur (14) dont la direction de polarisation (P1) est orthogonale à la direction de polarisation (P2) du deuxième polariseur (13).

8. Ecran d'affichage selon l'une des revendications 2 ou 3, caractérisé en ce que la cellule à cristal liquide (7) comporte un cristal liquide en hélice contenant un matériau colorant dichroïque.

9. Ecran d'affichage selon la revendication 8, caractérisé en ce que la cellule à cristal liquide (7) est accolée à l'afficheur électrooptique.

10. Ecran d'affichage selon la revendication 9, caractérisé en ce que :
- l'afficheur électrooptique (1) comporte un cristal liquide nématique en hélice ;
- l'ensemble constitué par l'afficheur électrooptique (1) et la cellule à cristal liquide (7) est placé entre un premier polariseur (13) et un deuxième polariseur (14) de directions de polarisations (P2, P1) orthogonales.

11. Dispositif de modulation de la lumière d'un écran d'affichage selon la revendication 1, caractérisé en ce qu'il comporte également au moins :
- un circuit de détection de lumière ambiante (36) permettant de détecter l'intensité lumineuse ambiante et de fournir un signal de commande au générateur de tension (32) en fonction de l'intensité de lumière ambiante.

12. Ecran d'affichage selon la revendication 11, caractérisé en ce qu'il comporte également, situé entre le circuit de détection (36) et le générateur (32) :
- un circuit de traitement (35) recevant du circuit de détection (36), un signal de détection, le traitant et fournissant en échange un signal de commande ;
- un circuit de commande (33) recevant ledit signal de commande et commandant le générateur de tensions (32).

## Claims

1. Display screen comprising:
- a light source (2);
- an electro-optical display (1) lit by transparency by the light source (2);
- electro-optical means (3) for control of the light beam emitted by the light source (2), these means being electrically controllable, being situated between the light source and the electro-optical display and letting through or blocking the light beam;
- a voltage generator (32) connected to the electro-optical control means and supplying them with a control voltage;
characterized in that the electro-optical control means (3) are furthermore means for controlled attenuation, making it possible to vary the intensity of the light beam transmitted to the electro-optical display (1) depending on the ambient light.

2. Display screen according to Claim 1, characterized in that the modulation means (3) include a liquid-crystal cell (30, 6, 7).

3. Display screen according to Claim 2, characterized in that:
- the liquid-crystal cell (30) includes a liquid crystal with dielectric anisotropy, such that it possesses two states, one transparent, the other diffusing according to whether an electric field is applied to it or not;
- it further includes a diaphragm (31) situated between the said liquid-crystal cell (30) and the electro-optical display (1), this diaphragm letting through the light which is normal to its plane and blocking the light which is oblique with respect to its plane.

4. Display screen according to one of Claims 2 or 3, characterized in that the liquid crystal (30) is a nematic liquid crystal.

5. Display screen according to one of Claims 2 or 3, characterized in that the diaphragm (31) includes a filtering network.

6. Display screen according to one of Claims 2 or 3, characterized in that:
- the liquid-crystal cell (6) includes a nematic liquid crystal in a helix;
- on either side of the liquid-crystal cell are placed a first polarizer (7) and a second polarizer (13), the polarization directions (P3 and P2) of these polarizers being orthogonal.

7. Display screen according to Claim 6, characterized in that the electro-optical display (1) includes a nematic liquid crystal in a helix and is placed between the second polarizer (13) and a third polarizer (14) whose polarization direction (P1) is orthogonal to the polarization direction (P2) of the second polarizer (13).

8. Display screen according to one of Claims 2 or 3, characterized in that the liquid-crystal cell (7) includes a liquid crystal in a helix containing a dichroic colouring material.

9. Display screen according to Claim 8, characterized in that the liquid-crystal cell (7) is fixed to the electro-optical display.

10. Display screen according to Claim 9, characterized in that:
- the electro-optical display (1) includes a nematic liquid crystal in a helix;
- the assembly consisting of the electro-optical display (1) and the liquid-crystal cell (7) is placed between a first polarizer (13) and a second polarizer (14) with orthogonal polarization directions (P2, P1).

11. Device for modulating the light of a display screen according to Claim 1, characterized in that it also includes at least:
- one ambient light detection circuit (36) allowing the ambient light intensity to be detected and a control signal to be supplied to the voltage generator (32) depending on the ambient light intensity.

12. Display screen according to Claim 11, characterized in that it also includes, situated between the detection circuit (36) and the generator (32):
- a processing circuit (35) receiving a detection signal from the detection circuit (36), processing it and supplying a control signal in exchange;
- a control circuit (33) receiving the said control signal and controlling the voltage generator (32).

## Patentansprüche

1. Anzeigeschirm, mit:
- einer Lichtquelle (2);
- einer elektrooptischen Anzeigeeinrichtung (1), die von der Lichtquelle (2) durchscheinend beleuchtet wird;
- elektrooptischen Steuermitteln (3) für das von der Lichtquelle (2) ausgesandten Lichtbündel, wobei diese Mittel elektrisch gesteuert werden können, sich zwischen der Lichtquelle und der elektrooptischen Anzeigeeinrichtung befinden und das Lichtbündel durchlassen oder sperren;
- einem Spannungsgenerator (32), der mit den elektrooptischen Steuermitteln verbunden ist und an diese eine Steuerspannung liefert;
dadurch gekennzeichnet, daß die elektrooptischen Steuermittel (3) außerdem Mittel zur gesteuerten Dämpfung sind, die die Veränderung der Intensität des zur elektrooptischen Anzeigeeinrichtung (1) durchgelassenen Lichtbündels in Abhängigkeit vom Umgebungslicht gestatten.

2. Anzeigeschirm gemäß Anspruch 1, dadurch gekennzeichet, daß die Modulationsmittel (3) eine Flüssigkristallzelle (30, 6, 7) enthalten.

3. Anzeigeschirm gemäß Anspruch 2, dadurch gekennzeichnet, daß:
- die Flüssigkristallzelle (30) einen Flüssigkristall mit dielektrischer Anisotropie umfaßt, derart, daß er zwei Zustände besitzt, wovon einer lichtdurchlässig ist und der andere streuend ist, je nachdem, ob an ihn ein elektrisches Feld angelegt wird oder nicht;
- er außerdem eine Blende (31) enthält, die sich zwischen der Flüssigkristallzelle (30) und der elektrooptischen Anzeigeeinrichtung (1) befindet, wobei diese Blende das zu ihrer Ebene senkrechte Licht durchläßt und das in bezug auf ihre Ebene schräg einfallende Licht sperrt.

4. Anzeigeschirm gemäß einem der Ansprüche 2 oder 3, dadurch gekennzeichnet, daß der Flüssigkristall (30) ein nematischer Flüssigkristall ist.

5. Anzeigeschirm gemäß einem der Ansprüche 2 oder 3, dadurch gekennzeichnet, daß die Blende (31) ein Filternetz enthält.

6. Anzeigeschirm gemäß einem der Ansprüche 2 oder 3, dadurch gekennzeichnet, daß:
- die Flüssigkristallzelle (6) einen helixartigen nematischen Flüssigkristall enthält;
- beiderseits der Flüssigkristallzelle ein erster Polarisator (7) bzw. ein zweite Polarisator (13) angeordnet sind, wobei die Polarisationsrichtungen (P3 und P2) dieser Polarisatoren zueinander senkrecht sind.

7. Anzeigeschirm gemäß Anspruch 6, dadurch gekennzeichnet, daß die elektrooptische Anzeigeeinrichtung (1) einen helixartigen nematischen Flüssigkristall enthält und zwischen dem zweiten Polarisator (13) und einem dritten Polarisator (14) angeordnet ist, dessen Polarisationsrichtung (P1) zur Polarisationsrichtung (P2) des zweiten Polarisators (13) senkrecht ist.

8. Anzeigeschirm gemäß einem der Ansprüche 2 oder 3, dadurch gekennzeichnet, daß die Flüssigkristallzelle (7) einen helixartigen Flüssigkristall aufweist, der ein dichroitisches Farbstoffmaterial enthält.

9. Anzeigeschirm gemäß Anspruch 8, dadurch gekennzeichnet, daß die Flüssigkristallzelle (7) an die elektrische Anzeigeeinrichtung angefügt ist.

10. Anzeigeschirm gemäß Anspruch 9, dadurch gekennzeichnet, daß:
- die elektrooptische Anzeigeeinrichtung (1) einen helixartigen nematischen Flüssigkristall enthält;
- die von der elektrooptischen Anzeigeeinrichtung (1) und von der Flüssigkristallzelle (7) gebildete Einheit zwischen einem ersten Polarisator (13) und einem zweiten Polarisator (14) mit zueinander senkrechten Polarisationsrichtungen (P2, P1) angeordnet ist.

11. Einrichtung zur Lichtmodulation eines Anzeigeschirms gemäß Anspruch 1, dadurch gekennzeichnet, daß sie außerdem wenigstens umfaßt:
- eine Umgebungslicht-Erfassungsschaltung (36), die die Erfassung der Umgebungslicht-Intensität und die Ausgabe eines Steuersignals an den Spannungsgenerator (32) in Abhängigkeit von der Umgebungslicht-Intensität erlaubt.

12. Anzeigeschirm gemäß Anspruch 11, dadurch gekennzeichnet, daß er zwischen der Erfassungsschaltung (36) und dem Generator (32) außerdem enthält:
- eine Verarbeitungsschaltung (35), die von der Erfassungsschaltung (36) ein Erfassungssignal empfängt, dieses verarbeitet und im Austausch ein Steuersignal ausgibt;
- eine Steuerschaltung (33), die das Steuersignal empfängt und den Spannungsgenerator (32) steuert.
